# EUROPÄISCHE PATENTANMELDUNG

(11) **EP 1 688 297 A2**
(43) Veröffentlichungstag der Anmeldung: **09.08.2006**
(21) Anmeldenummer: 05028347.2
(22) Anmeldetag: 23.12.2005
(51) Int. Cl.: B60L 7/00, B60L 7/26

(54) **Verfahren und Vorrichtung zum Einsparen von Energie in einem Fahrzeug**

(30) Priorität: 03.02.2005 DE 102005005002
(71) Anmelder: Güttler, Gerhard, Prof. Dr., 61462 Königstein (DE)
(72) Erfinder: Güttler, Gerhard, Prof. Dr., 61462 Königstein (DE)
(74) Vertreter: Knoblauch, Andreas

(57) **Zusammenfassung**

Die Erfindung betrifft ein Verfahren und eine Vorrichtung zum Einsparen von Energie in einem Fahrzeug (19), wobei das Fahrzeug (19) einen Antriebsmotor (1) und mindestens ein energieverbrauchendes Aggregat (2, 2a, 2b) aufweist und der Antriebsmotor (1) durch einen im Fahrzeug (19) betriebsbedingten Energiebedarf belastet ist.

Man möchte in einem Fahrzeug (19) die bereitgestellte Energie des Antriebsmotors (1) effektiver nutzen.

Dies wird dadurch erreicht, daß man einen Energieverbrauch mindestens eines Aggregats (2, 2a, 2b) in Abhängigkeit von einer Belastung des Antriebsmotors (1) durch einen Zusatzversteller (11) verstellt.

## Beschreibung

Die Erfindung betrifft ein Verfahren und eine Vorrichtung zum Einsparen von Energie in einem Fahrzeug, wobei das Fahrzeug einen Antriebsmotor und mindestens ein energieverbrauchendes Aggregat aufweist und der Antriebsmotor durch einen im Fahrzeug betriebsbedingten Energiebedarf belastet ist.

Ein Kraftfahrzeug ist beispielsweise ein Fahrzeug mit einem Antriebsmotor, das energietechnisch als "Inselsystem" gesehen werden kann. Das Fahrzeug weist eine eigene Energieerzeugung und Energieverteilung auf. Der Antriebsmotor des Kraftfahrzeugs wird durch einen mitgeführten Kraftstoff, z.B. Benzin oder Diesel, versorgt. Auch sind andere Energieversorgungsarten möglich, wie beispielsweise die Versorgung mit elektrischer Energie. Durch den laufenden Antriebsmotor wird nicht nur der Vortrieb des Fahrzeugs bewirkt, sondern es wird gleichzeitig Energie bereitgestellt, die zum Betreiben von Aggregaten, beispielsweise der Lichtmaschine, der Klimaanlage oder der Beleuchtung, im Fahrzeug verwendet werden kann. Der Antriebsmotor treibt somit die Aggregate an, entweder direkt, beispielsweise über einen Keilriemen, der mit einer rotierenden Welle des Antriebsmotors in Verbindung steht, oder indirekt, beispielsweise über elektrische, hydraulische oder pneumatische Leitungen. Die vom Antriebsmotor gelieferte Energie kann auch in elektrischer Form in einem Akkumulator zwischengespeichert und diesem später von Verbrauchern entnommen werden. Der Antriebsmotor wird durch die Aggregate belastet, und zwar um so mehr, je höher die Anzahl der angetriebenen Aggregate ist und je höher der Energieverbrauch der Aggregate ist. Unter Energieverbrauch wird hier eine Energieumwandlung verstanden, da tatsächlich in den Aggregaten keine Energie verbraucht wird, sondern nur in eine andere Form umgewandelt wird. Beispielsweise wandelt eine Lichtmaschine mechanische Rotationsenergie in elektrische Energie um. Eine Heizung als energieverbrauchendes Aggregat im Fahrzeug wandelt elektrische Energie in Wärme um.

Der Erfindung liegt die Aufgabe zugrunde, in einem Fahrzeug die bereitgestellte Energie des Antriebsmotors effektiver zu nutzen.

Diese Aufgabe wird bei einem Verfahren der eingangs genannten Art dadurch gelöst, daß man einen Energieverbrauch mindestens eines Aggregats in Abhängigkeit von einer Belastung des Antriebsmotors verstellt.

Soweit hier und im folgenden von "Energieverbrauch" die Rede ist, so ist in der Regel ein Leistungsbedarf gemeint. Summiert oder integriert man diesen Leistungsbedarf über einen vorbestimmten Zeitraum, ergibt sich der Energieverbrauch.

Die Belastung des Antriebsmotors richtet sich hauptsächlich nach dem eigentlichen Fahrbetrieb des Fahrzeugs und nach den im Fahrzeug betriebenen energieverbrauchenden Aggregaten. Diese Aggregate wirken bremsend auf das Fahrzeug, da sie direkt oder indirekt mit dem Antriebsmotor in Verbindung stehen. Die von den Aggregaten benötigte Leistung steht nicht mehr für den Antrieb des Fahrzeugs zur Verfügung. Der Fahrbetrieb belastet den Antriebsmotor mehr oder weniger stark. Dies hängt beispielsweise von der Beschaffenheit der Fahrbahn, dem Steigungswinkel der Fahrbahn und dem Eigengewicht und der Beladung des Fahrzeugs ab. Fährt das Fahrzeug beispielsweise bergauf, so ist die Belastung des Antriebsmotors höher als bei einer Bergabfahrt bei unverändertem Betrieb der Aggregate. Demnach steht bei einer Bergauffahrt weniger überschüssige Energie für die Aggregate zur Verfügung. Wird nun die Energieaufnahme mindestens eines Aggregats gedrosselt, so entlastet dieses Aggregat den Antriebsmotor. Man spart also durch den reduzierten Energieverbrauch Energie im Fahrzeug ein. Auch ist es möglich, daß das Aggregat vollständig abgeschaltet wird, so daß kein Energieverbrauch des Aggregats vorliegt. Das hier vorgestellte Wirkprinzip kann auf Aggregate angewendet werden, die elektrisch, hydraulisch oder pneumatisch arbeiten. Natürlich ist es eine zwingende Voraussetzung, daß alle Funktionalitäts- und Sicherheitsaspekte im Fahrzeug beachtet werden. So muß das Fahrzeug jederzeit sicher gelenkt und gebremst werden können. Mit der beschriebenen Vorgehensweise ist es also möglich, die Leistung des Antriebsmotors effektiver zu nutzen, mit anderen Worten die gegebenen Leistungsanforderungen eines Nebenaggregats mit einer möglichst geringen Zusatzbelastung des Antriebsmotors bereitzustellen.

Vorzugsweise verstellt man aus der Gruppe der Aggregate Lichtmaschine, Heckscheibenheizung, Frontscheibenheizung, Sitzheizung, Sitzkühlung, Klimaanlage, Wärmepumpe, Wärmetauscher, Klimakompressor, Ventilator, Lüftungseinrichtung, Druckluftbremse und Kühlvorrichtung intern und/oder extern, z.B. für Kühlkoffer auf LKW, mindestens ein Aggregat. Diese Aggregate können automatisch so verstellt werden, daß sie entweder ein oder ausgeschaltet werden oder ein anderer Energieverbrauch eingestellt wird. Eine Klimaanlage weist mehrere energieverbrauchende Komponenten auf, wie beispielsweise einen Kältemittelkompressor, einen Wärmetauscher und Ventilatoren zur Luftzirkulation. Es können somit auch gezielt einzelne Komponenten der Aggregate verstellt werden. Als Wärmepumpe können beispielsweise die kälteerzeugenden Komponenten der Klimaanlage angesehen werden. Es ist auch möglich, daß Aggregate weit entfernt vom Antriebsmotor angeordnet sind. Dies ist beispielsweise bei schienengebundenen Fahrzeugen mit angehängten Wagen der Fall oder bei Lastkraftwagen mit Anhängern. In diesen nicht angetriebenen Fahrzeuganhängern können ebenfalls Aggregate verstellt werden, die sich nach der Belastung des Antriebsmotors richten. Besonders wirksam sind hier Aggregate, die die Welle des Antriebsmotors in einer Höhe belasten, die in der Relation zur aktuell in Anspruch genommenen Motorleistung ins Gewicht fällt. Welche Aggregate konkret in Betracht kommen, bleibt einer jeweiligen Nutzen-/Kostenbetrachtung vorbehalten. Vorrangig sind dies Verbraucher mit 1 kW Leistungsaufnahme oder mehr. Wenn man mehrere Aggregate oder ein stärker belastendes Aggregat verwendet, dann sind durch die beschriebene Vorgehensweise durchaus Energie-Einsparpotentiale im Bereich von 5 bis 10 kW oder mehr zu erwarten.

Bevorzugterweise verstellt man den Energieverbrauch mindestens eines Aggregats zeitveränderlich. Da sich die Belastung des Antriebsmotors auf einer Fahrstrecke verändern kann, ist es günstig, wenn auch der Energieverbrauch mindestens eines Aggregats zeitlich verändert werden kann. Diese zeitliche Verstellung kann zeitkontinuierlich erfolgen oder in bestimmten Zeitintervallen durchgeführt werden.

Es ist besonders bevorzugt, daß man bei einer Entlastung des Antriebsmotors den Energieverbrauch des Aggregats erhöht. Bei einer solchen Vorgehensweise nutzt man besonders effektiv die bereitgestellte Energie des Antriebsmotors. Eine Entlastung des Antriebsmotors kann beispielsweise dann auftreten, wenn sich das Fahrzeug auf einer Bergabfahrt befindet. Fährt beispielsweise ein Lastkraftwagen für den Transport von Tiefkühlkost einen Berg hinunter, so wird auf dieser geneigten Strecke der Energieverbrauch des Kühlaggregats erhöht. Man kühlt dabei sozusagen auf Vorrat, so daß man in einem nachfolgenden Streckenabschnitt die Kühlleistung und damit den Energieverbrauch wieder vermindern kann.

Es ist bevorzugt, daß man einen Bremsvorgang des Fahrzeugs unterstützt, indem man den Energieverbrauch des Aggregats erhöht und das Aggregat durch den erhöhten Energieverbrauch auf das Fahrzeug bremsend wirkt. Möchte man ein Fahrzeug abbremsen, während beispielsweise die Klimaanlage in Betrieb ist, so ist es denkbar, daß in der Zeit des Bremsvorgangs der Energieverbrauch der Klimaanlage erhöht wird. Die Klimaanlage, die beispielsweise über einen Zahnradsatz den Antriebsmotor belastet, wirkt während des Bremsvorgangs als zusätzliche Belastung. Dies unterstützt die Bremswirkung des Fahrzeugs und wirkt somit als zusätzliche indirekte Motorbremse. Man beeinflußt somit das Aggregat durch momentan auftretende Ereignisse.

Gemäß einer bevorzugten Ausgestaltung der Erfindung berechnet man die zu erwartende Belastung des Antriebsmotors vorausschauend. Diese vorausschauende Berechnung ist eine Hochrechnung auf den zukünftigen Eintritt von Verkehrsereignissen.

Es ist bevorzugt, daß man zur vorausschauenden Berechnung der Belastung mindestens einen der folgenden Parameter verwendet: aktuelle Verkehrsdaten, Verkehrsprognosedaten, aktueller Streckenverlauf, beabsichtigter Streckenverlauf. Die vorausschauende Berechnung kann auf der Basis der aktuellen Fahrzeugposition und Fahrzeuggeschwindigkeit, der zu erwartenden Fahrzeugbewegung und allgemeinen Informationen, z.B. Stoppschilder, Strecken mit Kurven, Strecken mit Geschwindigkeitsbeschränkung, Verkehrsdichte, Verkehrsaufkommen, erfolgen. Diese Daten können beispielsweise durch adaptives Lernen im Fahrzeug hinterlegt werden. Die Vorhersagegüte ist um so besser, je mehr über die gewöhnlichen Fahrstrecken des Fahrzeugs bekannt ist und je häufiger diese Fahrstrecken gefahren werden. Dies bietet sich beispielsweise bei schienengebundenen Fahrzeugen an, die nach einem regelmäßigen Fahrplan bewegt werden. Auch bewegen sich Fahrzeuge im Wasser, beispielsweise Frachtschiffe, und fliegende Fahrzeuge, beispielsweise Passagierflugzeuge, nach einem Fahrplan und auf vorgegebenen Fahrstrecken.

Zweckmäßigerweise verstellt man den Energieverbrauch des Aggregats mit einem Zusatz-Sollwert. Ein Zusatz-Sollwert kann unabhängig von den weiteren Sollwerten zum Betrieb des Fahrzeugs erzeugt werden. Der Zusatz-Sollwert kann dann der Stelle im Fahrzeug zugeführt werden, wo eine Steuerung oder Regelung vorhanden ist.

Zweckmäßigerweise führt man den Zusatz-Sollwert dem Aggregat zu. Auf diese Weise können mehrere Aggregate durch unterschiedliche Zusatz-Sollwerte verstellt werden. So ist es auch möglich, daß eine Verstellung des Energieverbrauchs eines Aggregats unabhängig von einem Energieverbrauch eines anderen Aggregats eingestellt werden kann. Der Zusatz-Sollwert kann dem Aggregat leitungsgebunden oder auch über eine Funkverbindung zugeführt werden.

Bevorzugterweise überlagert man den Zusatz-Sollwert einem vorhandenen Sollwert am Aggregat. Das Verstellen des Energieverbrauchs am Aggregat erfolgt somit über eine Sollwertverstellung. Man muß also nicht in das eigentliche Wirkprinzip des jeweiligen Aggregats eingreifen. Innerhalb einer zulässigen Toleranz täuscht man lediglich einen anderen Umgebungszustand vor und veranlaßt so die gewünschte Reaktion am Aggregat. Dies hat den Vorteil, daß keine baulichen Änderungen und weitere Anschlußmöglichkeiten am Aggregat zur Verfügung gestellt werden müssen.

Zusätzlich oder alternativ zur Sollwertverstellung kann man das Aggregat auch durch einen Direkteingriff verstellen. Bei einem derartigen Direkteingriff kann man beispielsweise das Tast-Verhältnis bei einer Ein-AusSteuerung des Aggregats verändern. Man kann das Aggregat auf einen vorgegebenen Bruchteil seiner aktuellen oder nominalen Leistung zurücksetzen (oder entsprechend heraufsetzen). Man kann einen festen Wert für die Leistung des Aggregats einstellen.

Vorzugsweise ermittelt man die Belastung des Antriebsmotors aus Signalen eines Signalgebers. Ein solcher Signalgeber kann direkt an einer Welle des Antriebsmotors angebracht sein, beispielsweise ein Drehmomentenmesser. Auch ist es möglich, die Belastung des Antriebsmotors indirekt zu ermitteln, beispielsweise durch einen Höhenmesser, einen Neigungsmesser, einen Geschwindigkeitsmesser oder durch einen Datenspeicher, auf dem bekannte Wegstrecken hinterlegt sind.

Es ist besonders bevorzugt, daß der Signalgeber Ortskoordinaten des Fahrzeugs bereitstellt. Ortskoordinaten können beispielsweise durch eine Positionserkennungseinrichtung bereitgestellt werden. Mit dieser kann festgestellt werden, auf welcher geographischen Breite und welcher geographischen Länge sich das Fahrzeug gerade befindet. Auch ist es möglich, daß solche Positionserkennungseinrichtungen eine Höheninformation zur Verfügung stellen. Man erhält also dann nicht nur eine Information zu Koordinaten in der Ebene, sondern erhält auch die Information, auf welcher Höhe sich das Fahrzeug über Normalnull befindet. Stellt die Positionserkennungseinrichtung eine solche Höheninformation als dritte Dimensionsangabe nicht bereit, so ist es auch möglich, daß eine Höhenkoordinate aus den beiden anderen Koordinaten, beispielsweise unter Berücksichtigung einer bekannten Fahrstrecke, ermittelt wird. Die Ortskoordinaten des Fahrzeugs können auch für eine vorausschauende Berechnung der zu erwartenden Belastung des Antriebsmotors verwendet werden.

Die Aufgabe wird bei einer Vorrichtung der eingangs genannten Art dadurch gelöst, daß ein Energieverbrauch mindestens eines Aggregats in Abhängigkeit der Belastung des Antriebsmotors durch einen Zusatzversteller verstellbar ist.

Der Zusatzversteller kann elektrisch, hydraulisch oder pneumatisch wirken und an einer beliebigen Stelle im Fahrzeug eingebaut sein. Auch ist es möglich, daß mehrere Zusatzversteller die Aggregate verstellen. Der Zusatzversteller wirkt auf die Funktion des Aggregats ein, so daß sich die Belastung des Antriebsmotors durch das Verstellen des Aggregats ändert. Die Aggregate nutzen die bereitgestellte Energie des Antriebsmotors und wirken daher auf den Antriebsmotor bremsend.

Bevorzugterweise steht ein Signalgeber mit dem Zusatzversteller in Verbindung. Diese Verbindung kann leitungsgebunden oder auch funkbasiert sein. Der Signalgeber kann die Belastung des Antriebsmotors direkt überwachen, so daß der Zusatzversteller ohne Zeitverzögerung ein Signal des Signalgebers empfängt. Das Fahrzeug weist oft bereits Signalgeber auf, die über die Belastung des Antriebsmotors Aufschluß geben können. Als Signalgeber kommt beispielsweise ein Drehmomentenmesser an der Welle des Antriebsmotors in Frage.

Es ist besonders bevorzugt, daß der Signalgeber eine Positionserkennungseinrichtung ist. Eine Positionserkennungseinrichtung ermittelt die aktuelle Position des Fahrzeugs und stellt diese, beispielsweise über eine Anzeige, zur Verfügung. Solche sogenannten "Navigationssysteme" sind bei straßengebundenen Fahrzeugen weit verbreitet. Auf einem Datenträger des Navigationssystems sind Straßenkarten hinterlegt. Auch ist es möglich, daß der Datenträger Höhenangaben in Verbindung mit den Straßenkarten bereitstellt. Stehen diese Daten des Datenträgers dem Zusatzversteller zur Verfügung, so kann dieser den Energieverbrauch der Aggregate in Abhängigkeit der Ortskoordinaten einstellen.

Vorzugsweise werden dem Zusatzversteller Ortskoordinaten des Fahrzeugs zugeführt. Die Ortskoordinaten des Fahrzeugs können sich auf die geographische Länge und Breite beziehen, aber auch zusätzlich die Höhenlage des Fahrzeugs als Höhenkoordinate einbeziehen. Es können dem Zusatzversteller aktuelle Ortskoordinaten des Fahrzeugs zugeführt werden und auch Ortskoordinaten, die vorausschauend erwartet werden.

Bevorzugterweise weist der Zusatzversteller einen Datenspeicher auf. Auf dem Datenspeicher können Erfahrungsdaten aus vorangegangenen Fahrten mit dem Fahrzeug gespeichert werden. Auf diese Daten kann dann zurückgegriffen werden, sobald erneut die gleiche Strecke befahren wird.

Bevorzugterweise weist der Zusatzversteller eine Recheneinheit auf. Mit der Recheneinheit können auch zukünftige Ortskoordinaten des Fahrzeugs mit einer gewissen Wahrscheinlichkeit berechnet werden. Die Recheneinheit kann auch Daten aus dem Datenspeicher abrufen und auch nach einer Berechnung dort für zukünftige Anwendungen ablegen.

Es ist bevorzugt, daß mit dem Zusatzversteller ein Zusatz-Sollwert erzeugbar ist, der dem Aggregat zugeführt wird. Dies ist eine einfache Möglichkeit, den Zusatzversteller direkt auf das Aggregat wirken zu lassen. Der erzeugte Zusatz-Sollwert kann dann dem Aggregat über eine Signalleitung oder eine Funkverbindung zugeführt werden. Auch ist es möglich, daß der Zusatzversteller mehrere Aggregate gleichzeitig oder zeitlich nacheinander ansteuert.

Es ist bevorzugt, daß der Zusatz-Sollwert einem Sollwerteingang des Aggregats zugeführt wird. Weist das Aggregat bereits einen Sollwerteingang auf, so ist keine weitere Maßnahme notwendig, um den Zusatz-Sollwert auf das Aggregat wirken zu lassen. Weist das Aggregat mehrere Sollwerteingänge auf, so ist es möglich, daß ein Eingang nur für den Zusatz-Sollwert vorgesehen ist. Auch ist es möglich, daß der Zusatz-Sollwert einem bereits vorhandenen Sollwert an einem Sollwerteingang des Aggregats überlagert wird.

Die Erfindung wird im folgenden in Verbindung mit der Zeichnung näher beschrieben. Hierin zeigen:
- Fig. 1: eine Prinzipskizze zur Funktionsweise des Verfahrens und der Vorrichtung und
- Fig. 2: einen Vergleich verschiedener Verstellprinzipien an einem Aggregat in einem Fahrzeug.

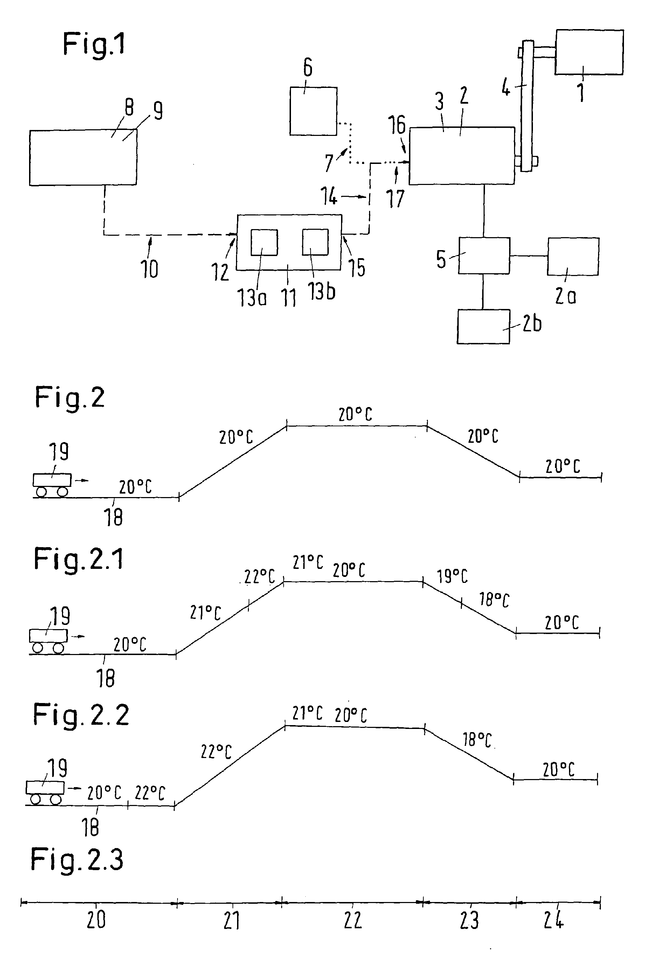

Fig. 1 zeigt eine Vorrichtung, die innerhalb eines Fahrzeugs vorhanden ist. Das Fahrzeug weist einen Antriebsmotor 1 und ein Aggregat 2 auf, das Energie des Antriebsmotors 1 aufnimmt. Im vorliegenden Beispiel ist das Aggregat 2 eine Lichtmaschine 3, die über einen Keilriemen 4 mit dem Antriebsmotor 1 in Verbindung steht. Die Lichtmaschine 3 wandelt Rotationsenergie des Antriebsmotors 1 in elektrische Energie um. Diese elektrische Energie gibt die Lichtmaschine 3 an einen Akkumulator 5 ab. Der Akkumulator 5 kann weitere Aggregate 2a, 2b mit elektrischer Energie versorgen.

Die am Akkumulator 5 angeschlossenen Aggregate 2a, 2b werden indirekt vom Antriebsmotor 1 angetrieben. Die benötigte Energie für diese Aggregate 2a, 2b wird im Akkumulator 5 zwischengespeichert und zu einem beliebigen Zeitpunkt abgerufen. Im Gegensatz hierzu steht das Aggregat 2 als Lichtmaschine 3 direkt mit dem Antriebsmotor 1 in Verbindung und wird von diesem angetrieben. Weitere direkt angetriebene Aggregate 2 sind beispielsweise eine Wasser-, Öl- und Servopumpe sowie ein Klimakompressor einer Klimaanlage. Die Kopplung dieser direkt angetriebenen Aggregate 2 mit dem Antriebsmotor 1 geschieht beispielsweise, wie bei der dargestellten Lichtmaschine 3, über einen Keilriemen 4 oder auch beispielsweise über Zahnräder oder ähnlich geeignete Kopplungsvorrichtungen.

Wie in Fig. 1 dargestellt, wird die Lichtmaschine 3 von einem Laderegler 6 beeinflußt. Der Akkumulator 5 wird mit Hilfe des Ladereglers 6 durch die Lichtmaschine 3 geladen. Die Aufladung des Akkumulators 5 setzt bei einer Zweipunktregelung nach Unterschreiten einer bestimmten unteren Grenze des Ladezustands ein und erfolgt bis zum Erreichen einer oberen Grenze des Ladezustands. Bei einer Proportionalregelung erfolgt das Aufladen des Akkumulators 5 mit einem Ladestrom, der proportional zu einem festgelegten und ermittelten Ladezustandsdefizit ist. Bei beiden Ladeverfahren werden nur die Zustandsgrößen des Akkumulators 5 und gegebenenfalls eine momentane Stromabgabe an die energieverbrauchenden elektrischen Aggregate 2a, 2b berücksichtigt. Der Laderegler 6 stellt als Sollwertgeber einen Sollwert 7 der Lichtmaschine 3 zur Verfügung, um deren Betriebsverhalten zu ändern.

In einem Kraftfahrzeug gibt es eine Reihe von Aggregaten, die für einen Regelungseingriff verfügbar sind. Natürlich wird man nicht jedes Aggregat verwenden können. Sicherheits- und Funktionalitätsanforderungen müssen in jedem Fall beachtet werden. So muß beispielsweise die Betriebsbremse in jedem Zeitpunkt funktionsfähig sein. Bei gelenkten Fahrzeugen, die mit einer hilfskraftbetätigten Lenkunterstützung ausgerüstet sind, muß auch die Lenkung jederzeit funktionieren. Die Fahrzeugaußenbeleuchtung wird man ebenfalls nicht vermindern können, ohne die Sicherheit des Verkehrs zu beeinträchtigen.

Allerdings gibt es in modernen Fahrzeugen durchaus eine Reihe von Aggregaten, die eine Leistungsaufnahme haben, die im Betrieb des Fahrzeugs durchaus spürbar ist. Im Grunde gilt dies für alle Aggregate, die eine Leistungsaufnahme von mindestens 2 kW, evtl. auch schon von 1 kW, an der Welle des Antriebsmotors 1 bewirken. Manche Aggregate haben durchaus eine größere Leistungsaufnahme. Werden solche Aggregate zusammen betrieben, dann kann man durchaus mit einem zusätzlichen Leistungsbedarf in der Größenordnung von 5 bis 10 kW oder darüber hinaus arbeiten.

Besonders geeignet ist beispielsweise die Klimaanlage. Die Klimaanlage hat eine relativ hohe Leistungsaufnahme. Eine Veränderung ihres Betriebs ist für einen Benutzer zwar spürbar, kurzzeitige kleinere Änderungen werden jedoch in der Regel nicht als unangenehm empfunden.

Ein anderes Aggregat ist die Sitzheizung. Eine Sitzheizung hat zwar als Leistungsbedarf nur einige 100 Watt. Da sie vielfach gestuft arbeitet, kann man gegebenenfalls die einzelnen Stufen in Betrieb nehmen oder außer Betrieb setzen.

Ein weiteres Aggregat ist beispielsweise eine Sitzkühlung. Eine derartige Sitzkühlung kann beispielsweise mit Pelletier-Elementen arbeiten.

Ein relativ großer Energieverbraucher ist eine Heckscheibenheizung. Wenn diese beispielsweise mehrstufig ist und der Fahrer nicht die höchste Stufe eingestellt hat, kann bei einer Bergabfahrt oder beim Bremsen ein vorübergehendes Hochschalten auf eine höhere Leistungsaufnahme sinnvoll sein, um später die Lichtmaschine zu entlasten.

Bei einem Akkumulator, der sogenannten "Starter-Batterie", kann man den Lade- oder Nachladevorgang durch Eingriff in den Laderegler beeinflussen.

Bei vielen LKW gibt es eine Druckluftbremse. Hier könnte man bei einer Bergabfahrt auf jeden Fall immer die Vorratstanks auf einen oberen Druckwert auffüllen, was ja schon im Hinblick auf die Bremsanforderung Sinn macht.

Ein Signalgeber 8, im vorliegenden Ausführungsbeispiel eine Positionserkennungseinrichtung 9, ist im Fahrzeug bereits installiert, hat aber zunächst keine Wirkung auf die Aggregate 2, 2a, 2b. Die Positionserkennungseinrichtung 9 ist beispielsweise ein sogenanntes "Navigationssystem", das aus Funksignalen von Satelliten die geographische Position des Fahrzeugs berechnet. Diese geographische Position wird beispielsweise auf einer Anzeige des Navigationssystems oder durch eine Sprachübermittlung bekanntgegeben. Die geographische Position des Fahrzeugs wird nun unabhängig von der Anzeige oder Sprachübermittlung als Signal 10 einem Zusatzversteller 11 zugeführt. Der Zusatzversteller 11 weist hierzu einen Verstellereingang 12 auf. Auch ist es möglich, daß das Signal 10 vom Signalgeber 8 zum Zusatzversteller 11 über eine Funkverbindung übertragen wird. Der Zusatzversteller 11 weist einen Datenspeicher 13a und eine Recheneinheit 13b auf. Der Zusatzversteller 11 ermittelt einen Zusatz-Sollwert 14, der von einem Verstellerausgang 15 des Zusatzverstellers 11 aus der Lichtmaschine 3 zugeführt wird. Der Zusatz-Sollwert 14 kann leitungsgebunden oder durch eine Funkverbindung vom Zusatzversteller 11 zum Aggregat 2 übertragen werden. Im vorliegenden Fall wird der Zusatz-Sollwert 14 leitungsgebunden einem Sollwerteingang 16 der Lichtmaschine 3 zugeführt. An diesem Sollwerteingang 16 liegt bereits der Sollwert 7 des Ladereglers 6 an. Es überlagert sich somit der Sollwert 7 und der Zusatz-Sollwert 14.

Eine Beeinflussung des Aggregats 2 durch den Zusatzversteller 11 erfolgt demnach über eine Sollwertverstellung. Dies hat den Vorteil, daß man nicht in das eigentliche Wirkprinzip der Lichtmaschine 3 eingreifen muß. Ein Sollwerteingang 16 ist bereits an der Lichtmaschine 3 vorhanden. Im vorliegenden Fall wird die Lichtmaschine 3 dadurch verstellt, daß ein Erregerstrom im Rotor der Lichtmaschine 3 beeinflußt wird, so daß die Lichtmaschine 3 unabhängig von der Fahrgeschwindigkeit oder Motordrehzahl des Fahrzeugs verstellbar ist. Wenn die Lichtmaschine 3 veranlaßt werden soll, den Akkumulator 5 zu laden, wird ein Gesamt-Sollwert 17 am Sollwerteingang 16, der sich aus der Überlagerung des Sollwerts 7 und des Zusatz-Sollwerts 14 ergibt, durch den Zusatz-Sollwert 14 erhöht. Der Lichtmaschine 3 wird dann vorgetäuscht, daß der Ladezustand des Akkumulators 5 zu gering ist. Im umgekehrten Fall bei einem hohen Ladezustand wird der Sollwert 16 abgesenkt.

Es gibt nun mehrere Möglichkeiten, wie die Sollwertverstellung durch den Zusatzversteller 11 durchgeführt werden kann. In Fig. 2 mit den Teilfiguren 2.1, 2.2 und 2.3 sind drei identische Höhenprofile einer Fahrstrecke 18 gezeigt, die jeweils von einem Fahrzeug 19 befahren werden. Das Fahrzeug 19 ist hier ein Kraftfahrzeug mit einer Klimaanlage als Aggregat 2, die über einen Keilriemen 4 vom Antriebsmotor 1 angetrieben wird. Die Fahrstrecke 18 setzt sich im vorliegenden Fall aus fünf Teilstrecken 20, 21, 22, 23, 24 zusammen, wobei die Teilstrecken 20, 22, 24 horizontal verlaufen und die Teilstrecken 21, 23 aufwärts bzw. abwärts geneigt sind. Der Fahrer des Fahrzeugs 19 stellt jeweils zu Fahrtbeginn an der dargestellten Position des Fahrzeugs 19 manuell an der Klimaanlage einen Sollwert 7 von 20°C ein. Bei allen drei Beispielen der Figuren 2.1, 2.2 und 2.3 wird dieser Sollwert 7 während der Fahrt vom Fahrer nicht verstellt. In den vorliegenden Beispielen wird der Kühlbetrieb der Klimaanlage näher betrachtet. Beim Kühlen sind die Leistungsanforderungenan den Klimakompressor besonders hoch, was wiederum die Motorwelle des Fahrzeugs 19 belastet. Beim Heizen steht Wärme gewöhnlicherweise als Motorabwärme ausreichend zur Verfügung, so daß mit einem Gebläse die Wärme verteilt werden kann. Es sind somit im Kühlbetrieb höhere Leistungsanforderungen an den Klimakompressor zu erwarten als im Heizbetrieb. Auch ist der Kühlbetrieb bei niedrigen Temperaturen von Interesse, um die Luft zu trocknen und so beispielsweise ein Beschlagen der Scheiben zu vermeiden.

In Fig. 2.1 wird der herkömmliche Betrieb der Klimaanlage während der Fahrt des Fahrzeugs 19 auf der Fahrstrecke 18 gezeigt. Der Sollwert 7 am Sollwerteingang 16 der Klimaanlage beträgt unverändert während der gesamten Fahrt 20°C.

In Fig. 2.2 und Fig. 2.3 fährt das Fahrzeug 19 jeweils die gleiche Fahrstrecke 18 mit gleicher Ausgangsposition, jedoch ist nun im Fahrzeug 19 ein Zusatzversteller 11 wirksam. Es ist zu beachten, daß Sollwertverstellungen durch den Zusatzversteller 11 mitunter deutlich höher ausfallen als Schwankungen im Verlauf der Ist-Temperaturen im Fahrzeug 19, die mit einer gewissen Verzögerung folgen. Das bedeutet, daß so gut wie keine Komforteinbußen zu erwarten sind. In Fig. 2.2 wird die momentane Beeinflussung der Klimaanlage durch den Zusatzversteller 11 verdeutlicht, während in Fig. 2.3 die vorausschauende Betriebsweise des Zusatzverstellers 11 dargelegt wird. Die momentane Beeinflussung sowie die vorausschauende Beeinflussung des Zusatzverstellers 11 kann auch miteinander kombiniert werden.

In Fig. 2.2 wird die Sollwertverstellung des Zusatzverstellers 11 aufgrund aktueller Parameter während der Fahrt vorgenommen. Der Sollwert der Klimaanlage im Fahrzeug 19 beträgt zu Beginn 20°C. Dieser Sollwert 7 ändert sich auch während der gesamten Fahrstrecke 18 nicht, da der Fahrer auch hier die Klimaanlage während der Fahrt nicht verstellt. Jedoch überlagert sich dem Sollwert 7 von 20°C der Zusatz-Sollwert 14, wenn das Fahrzeug feststellt, beispielsweise mit Hilfe eines Neigungssensors, daß es eine Steigung hinauffährt. Es ergibt sich dann zunächst der Gesamt-Sollwert 17 an der Klimaanlage von 21°C. Bei einem Gesamt-Sollwert von 21°C verbraucht die Klimaanlage weniger Energie als bei einem Gesamt-Sollwert 17 von 20°C, da bei einem Gesamt-Sollwert von 21°C weniger gekühlt werden muß, also weniger Leistung des Kältemittelkompressors erforderlich ist, als bei einem Gesamt-Sollwert von 20°C. Befindet sich die Klimaanlage im Heizbetrieb, steht gewöhnlich ohnehin genügend Motorabwärme zur Verfügung, so daß der Vorgang für den Motor belastungsneutral ist. Diese Wärme kann abgeleitet und der Klimaanlage zugeführt werden. Sollte die Außentemperatur ohnehin zu hoch sein, benötigt die Klimaanlage bei einem höheren Gesamt-Sollwert weniger Leistung des Kältemittelkompressors. Auf diese Weise wird bei der Bergauffahrt auf der Teilstrecke 21 der Antriebsmotor 1 entlastet, da die Klimaanlage des Fahrzeugs 19, die über einen Keilriemen 4 mit dem Antriebsmotor 1 in Verbindung steht, weniger stark bremsend auf den Antriebsmotor 1 wirkt. Dauert die Bergauffahrt noch weiter an, so wird der Zusatz-Sollwert 14 weiter angehoben, so daß sich ein Gesamt-Sollwert 17 von 22°C ergibt. Erreicht das Fahrzeug 19 den horizontalen Streckenabschnitt 22, so wird der Gesamt-Sollwert 17 wieder auf 20°C eingestellt. In manchen Fällen kann es allerdings auch empfehlenswert sein, den Gesamt-Sollwert 17 nicht auf 20°C, sondern nur auf 21°C abzusenken. In diesem Fall ist der Temperatursprung geringer und der aktuelle Leistungsbedarf der Klimaanlage belastet den Motor während der Horizontalfahrt nicht übermäßig. Auch wird ein behutsamer Temperaturabfall oft als angenehmer empfunden.

Bei der anschließenden Bergabfahrt im Streckenabschnitt 23, die wiederum durch einen Neigungssensor ermittelt werden kann, wird die Energie des Antriebsmotors 1 genutzt. Das Bergabfahren belastet den Antriebsmotor 1 weniger stark als das Fahren auf einem horizontalen Streckenabschnitt oder bei einer Bergauffahrt. Im Streckenabschnitt 23 sorgt der Zusatzversteller 11 dafür, daß zunächst ein Gesamt-Sollwert 17 von 19°C eingestellt wird. Im Laufe der Bergabfahrt stellt der Zusatzversteller fest, daß die überschüssige Energie des Antriebsmotors 1 nicht mehr zum Laden des Akkumulators 5 benötigt wird, so daß die Klimaanlage die volle Energie der Bergabfahrt nutzen kann. Somit verstellt der Zusatzversteller 11 durch den Zusatz-Sollwert 14 den Gesamt-Sollwert 17 auf 18°C. Erreicht das Fahrzeug 19 wieder eine horizontal verlaufende Strecke, hier die Strecke 24, so wird der Gesamt-Sollwert 17 zurück auf 20°C gesetzt. Die Sollwertverstellung gemäß Fig. 2.2 ist demnach eine instantane Beeinflussung des Aggregats 2. Dabei wird das Aggregat 2 aufgrund sich ändernder aktueller Werte von Parametern verstellt. Dies ist im vorliegenden Beispiel das sich ändernde Gefälle der Fahrtstrecke 18 und der Ladezustand des Akkumulators 5.

Eine andere Möglichkeit, die Neigung des Streckenverlaufs zu bestimmen, besteht darin, Positionsdaten zu verwenden und anhand der Positionsdaten in einer dreidimensional angelegten Karte, die durchaus digital abgespeichert sein kann, die jeweilige Steigung des aktuellen Streckenverlaufs zu berechnen. Diese Ausgestaltung hat den Vorteil, daß man auch künftige Steigungen, Gefälle, Kurven oder andere die Fahrt beeinflussende Parameter berücksichtigen kann. Dies wird weiter unten im Zusammenhang mit Fig. 2.3 beschrieben.

In vielen Fällen ist es interessant, die aktuelle mittlere Leistungsanforderung des Aggregats zu kennen. Beispielsweise kann man aus dem Auftastverhältnis einer Klimaanlage für eine gegebene Solltemperatur, z.B. 20°C, die mittlere Kühlleistungsanforderung herleiten. Beträgt das Auftastverhältnis beispielsweise 1/3, so läuft die Kühlung im Mittel mit 1/3 der nominellen Leistung.

Man kann diese Erkenntnis dann verwerten, um das Aggregat nicht durch Sollwertverstellung, sondern durch einen direkten Eingriff zu verstellen, beispielsweise von 1/3 der nominellen Leistung auf 1/4 oder 1/2 der nominellen Leistung.

In Fig. 2.3 ist eine weitere Möglichkeit zur Sollwertverstellung gegeben. Dabei wird eine Sollwertverstellung aufgrund der Erwartung zukünftiger Werte von Parametern durchgeführt. Die dort gezeigte Sollwertverstellung ist eine antizipative Beeinflussung. Die Antizipation ist die Hochrechnung auf den künftigen Eintritt von Verkehrsumständen, also den zu erwartenden Verkehrsabläufen und -ereignissen, und wird von der Recheneinheit 13b unter Verwendung des Datenspeichers 13a des Zusatzverstellers 11 durchgeführt. Die Hochrechnung berücksichtigt dabei beispielsweise die aktuelle Fahrzeugposition und Geschwindigkeit, die zu erwartende Fahrzeugbewegung und evtl. auch weitere allgemeine Informationen über den Straßenverkehr, wie beispielsweise Stoppschilder, Strecken mit Geschwindigkeitsbeschränkung, Verkehrsdichte und Staus. Die Hochrechnung umfaßt beispielsweise, ob eine gerade befahrene Straße in den nächsten Minuten überhaupt verlassen werden kann oder ob sich Verzweigungsmöglichkeiten anbieten. Bei Verzweigungsmöglichkeiten ist wiederum zu unterscheiden, mit welcher Wahrscheinlichkeit welche Straßenverzweigung gewählt werden wird. Ist ein Ziel im Positionserkennungssystem des Fahrzeugs 19 mit hinterlegtem Straßenverlauf vorhanden, so kann mit hoher Wahrscheinlichkeit die zukünftige Fahrroute über Verzweigungspunkte hinweg vorhergesagt werden. Auch ist es möglich, daß die Recheneinheit 13b des Zusatzverstellers 11 eine immer wieder gefahrene Strecke aus zuvor gespeicherten Daten erkennt und so ebenfalls eine relativ sichere Vorhersage der zu erwartenden Fahrstrecke 18 macht. Bei der vorausschauenden Betriebsweise des Zusatzverstellers im Fahrzeug 19 kann weiterhin auch eine Klassifikation des Fahrwegs, z.B. Autobahn, Bundesstraße, Landstraße oder Stadtverkehr, berücksichtigt werden. Auch sind Auswertungen von Verkehrsfunkinformationen, z.B. durch Funkempfang, mit dem Zusatzversteller 11 möglich. So ist beispielsweise bei einer Staumeldung vorhersehbar, daß das Fahrzeug 19 in ein oder zwei Minuten mit Sicherheit aus hoher Geschwindigkeit abgebremst werden muß. Bei schienengebundenem Betrieb ist die vorausschauende Betriebsweise mit entsprechend verringerter Varianz möglich.

In Fig. 2.3 berechnet der Zusatzversteller 11 im Fahrzeug 19 vorausschauend die zu erwartende Bergauffahrt im Streckenabschnitt 21. Aus diesem Grund wird bereits im letzten Bereich des Streckenabschnitts 20 der Gesamt-Sollwert 17 aus der Überlagerung des Sollwerts 7 und des Zusatz-Sollwerts 14 auf 22°C eingestellt. Dies entlastet den Antriebsmotor 1 bereits vor Beginn der zu erwartenden Bergauffahrt. Die Klimaanlage wird bereits vor der Bergauffahrt gedrosselt und erzeugt somit weniger Kälte. Auf diese Weise kann die von der Klimaanlage nicht verbrauchte Energie des Antriebsmotors 1 über die Lichtmaschine an den Akkumulator 5 abgegeben werden, der während der Bergauffahrt weitere energieverbrauchende Aggregate, beispielsweise 2a, 2b, versorgt, deren Energieverbrauch während der Bergauffahrt nicht reduziert werden kann. Dies sind beispielsweise die Scheinwerfer des Fahrzeugs 19, die während einer Fahrt bei Dunkelheit unverändert betrieben werden sollen. Der Gesamt-Sollwert 17 von 22°C wird bereits im Streckenabschnitt 20 eingestellt und im gesamten Streckenabschnitt 21 beibehalten.

Im Gegensatz zu Fig. 2.2 kann bei einer vorausschauenden Betriebsweise die Länge und die Steigung der Teilstrecke 21 abgeschätzt werden, so daß von vornherein bereits beispielsweise ein Wert von 22°C festgelegt wird. Erreicht das Fahrzeug 19 den horizontal verlaufenden Streckenabschnitt 22, so veranlaßt der Zusatzversteller 11 einen Gesamt-Sollwert 17 von beispielsweise 20°C oder auch wieder anfangs 21°C, um eine übermäßige Belastung des Antriebsmotors 1 durch die Klimaanlage zu vermeiden. Wenn man die zu erwartende weitere Fahrumgebung kennt, beispielsweise durch den im Navigationssystem abgelegten beabsichtigten Streckenverlauf, dann kann es auch Sinn machen, den Gesamt-Sollwert 17 bei 22°C zu belassen oder nur auf 21°C zurückzunehmen und diesen erst bei einer ebenfalls zu erwartenden Bergabfahrt auf 19°C zu senken. Vergleicht man die Fig. 2.2 und 2.3 miteinander, so stellt man bezüglich der Darstellung des vorausschauenden Betriebs fest, daß in Fig. 2.3 das Heraufsetzen des Gesamt-Sollwerts 17 auf 22°C bereits im Streckenabschnitt 20 erfolgt. Genauso könnte natürlich auch am Ende des Streckenabschnitts 22 der Gesamt-Sollwert 17 bereits auf 19°C oder 18°C abgesenkt werden, z.B. wenn bekannt ist, daß der Fahrer vor dem Gefälle bereits wird abbremsen müssen.

Liegen in dem horizontalen Teilabschnitt 22 keine weiteren zu erwartenden Veränderungen der Fahrstrecke vor, so wird der Gesamt-Sollwert 17 später auf 20°C gehalten. Bei der Bergabfahrt im Streckenabschnitt 23 wird entsprechend der Gesamt-Sollwert 17 durch den Zusatzversteller 11 erniedrigt, beispielsweise auf 18°C. Damit wird erreicht, daß die bei der Bergabfahrt gerade zur Verfügung stehende Energie dem Aggregat 2 zugeführt wird und dieses dann noch zusätzlich auf den Antriebsmotor 1 bremsend wirkt. Erreicht das Fahrzeug 19 die Teilstrecke 24, so wird wieder ein Gesamt-Sollwert 17 von 20°C eingestellt. Dies geschieht entweder durch eine Überlagerung des Zusatz-Sollwerts 14 mit dem Sollwert 7, wie bei der gesamten Fahrt bisher, oder auch durch die Deaktivierung des Zusatzverstellers 11. Das Abschalten der Klimaanlage kurz vor Ankunft des Zielortes, hier der Endpunkt des Streckenabschnitts 24, hat den Vorteil, daß kein Tauwasser in dem Luftkühler der Klimaanlage stehen bleibt, das sonst zu Mikrobenbildung führen kann.

## Patentansprüche

1. Verfahren zum Einsparen von Energie in einem Fahrzeug, wobei das Fahrzeug einen Antriebsmotor und mindestens ein energieverbrauchendes Aggregat aufweist und der Antriebsmotor durch einen im Fahrzeug betriebsbedingten Energiebedarf belastet ist, **dadurch gekennzeichnet, daß** man einen Energieverbrauch mindestens eines Aggregats (2, 2a, 2b) in Abhängigkeit von einer Belastung des Antriebsmotors (1) verstellt.

2. Verfahren nach Anspruch 1, **dadurch gekennzeichnet, daß** man aus der Gruppe der Aggregate (2, 2a, 2b) Lichtmaschine (3), Heckscheibenheizung, Frontscheibenheizung, Sitzheizung, Sitzkühlung, Klimaanlage, Wärmepumpe, Wärmetauscher, Klimakompressor, Ventilator, Lüftungseinrichtung, Druckluftbremse und Kühlvorrichtung mindestens ein Aggregat (2, 2a, 2b) verstellt.

3. Verfahren nach Anspruch 1 oder 2, **dadurch gekennzeichnet, daß** man den Energieverbrauch mindestens eines Aggregats (2, 2a, 2b) zeitveränderlich verstellt.

4. Verfahren nach einem der Ansprüche 1 bis 3, **dadurch gekennzeichnet, daß** man bei einer Entlastung des Antriebsmotors (1) vom Fahrbetrieb den Energieverbrauch des Aggregats (2, 2a, 2b) erhöht.

5. Verfahren nach einem der Ansprüche 1 bis 4, **dadurch gekennzeichnet, daß** man einen Bremsvorgang des Fahrzeugs (19) unterstützt, indem man den Energieverbrauch des Aggregats (2, 2a, 2b) erhöht und das Aggregat (2, 2a, 2b) durch den erhöhten Energieverbrauch auf das Fahrzeug (19) bremsend wirkt.

6. Verfahren nach einem der Ansprüche 1 bis 5, **dadurch gekennzeichnet, daß** man die zu erwartende Belastung des Antriebsmotors (1) vorausschauend berechnet.

7. Verfahren nach Anspruch 6, **dadurch gekennzeichnet, daß** man zur vorausschauenden Berechnung der Belastung mindestens einen der folgenden Parameter verwendet: aktuelle Verkehrsdaten, Verkehrsprognosedaten, aktueller Streckenverlauf, beabsichtigter Streckenverlauf.

8. Verfahren nach einem der Ansprüche 1 bis 7, **dadurch gekennzeichnet, daß** man den Energieverbrauch des Aggregats (2, 2a, 2b) mit einem Zusatz-Sollwert (14) verstellt.

9. Verfahren nach Anspruch 8, **dadurch gekennzeichnet, daß** man den Zusatz-Sollwert (14) dem Aggregat (2, 2a, 2b) zuführt.

10. Verfahren nach Anspruch 8 oder 9, **dadurch gekennzeichnet, daß** man den Zusatz-Sollwert (14) einem vorhandenen Sollwert (7) am Aggregat (2, 2a, 2b) überlagert.

11. Verfahren nach einem der Ansprüche 1 bis 10, **dadurch gekennzeichnet, daß** man das Aggregat (2, 2a, 2b) durch einen Direkteingriff verstellt.

12. Verfahren nach einem der Ansprüche 1 bis 11, **dadurch gekennzeichnet, daß** man die Belastung des Antriebsmotors (1) aus Signalen (10) eines Signalgebers (8) ermittelt.

13. Verfahren nach Anspruch 12, **dadurch gekennzeichnet, daß** der Signalgeber (8) Ortskoordinaten des Fahrzeugs (19) bereitstellt.

14. Vorrichtung zum Einsparen von Energie in einem Fahrzeug, wobei das Fahrzeug einen Antriebsmotor (1) und mindestens ein energieverbrauchendes Aggregat (2, 2a, 2b) aufweist, und der Antriebsmotor (1) durch einen im Fahrzeug (19) betriebsbedingten Energiebedarf belastet ist, **dadurch gekennzeichnet, daß** ein Energieverbrauch mindestens eines Aggregats (2, 2a, 2b) in Abhängigkeit der Belastung des Antriebsmotors (1) durch einen Zusatzversteller (11) verstellbar ist.

15. Vorrichtung nach Anspruch 14, **dadurch gekennzeichnet, daß** ein Signalgeber (8) mit dem Zusatzversteller (11) in Verbindung steht.

16. Vorrichtung nach Anspruch 15, **dadurch gekennzeichnet, daß** der Signalgeber (8) eine Positionserkennungseinrichtung ist.

17. Vorrichtung nach einem der Ansprüche 14 bis 16, **dadurch gekennzeichnet, daß** dem Zusatzversteller (11) Ortskoordinaten des Fahrzeugs (19) zugeführt werden.

18. Vorrichtung nach einem der Ansprüche 14 bis 17, **dadurch gekennzeichnet, daß** der Zusatzversteller (11) einen Datenspeicher (13a) aufweist.

19. Vorrichtung nach einem der Ansprüche 14 bis 18, **dadurch gekennzeichnet, daß** der Zusatzversteller (11) eine Recheneinheit (13b) aufweist.

20. Vorrichtung nach einem der Ansprüche 14 bis 19, **dadurch gekennzeichnet, daß** mit dem Zusatzversteller ein Zusatz-Sollwert (14) erzeugbar ist, der dem Aggregat (2, 2a, 2b) zugeführt wird.

21. Vorrichtung nach Anspruch 20, **dadurch gekennzeichnet, daß** der Zusatz-Sollwert (14) einem Sollwerteingang (16) des Aggregats (2, 2a, 2b) zugeführt wird.
